Europäisches Patentamt

European Patent Office

Office européen des brevets

(11) Publication number: **0 067 247**
**A1**

(12) **EUROPEAN PATENT APPLICATION**

(21) Application number: **81109897.9**

(22) Date of filing: **26.11.81**

(51) Int. Cl.³: **B 60 B 21/02**
**B 60 B 3/04**

(30) Priority: **02.12.80 JP 173105/80 U**

(43) date of publication of application:
**22.12.82 Bulletin 82/51**

(84) Designated Contracting States:
**DE FR GB IT**

(71) Applicant: **TOPY Industry Co., Ltd.**
**5-9, Yonbancho Chiyoda-ku**
**Tokyo(JP)**

(72) Inventor: **Yoshihiro, Kazuhide**
**No.484, Ohgami**
**Ayase-City Kanagawa-Prefecture(JP)**

(72) Inventor: **Maruyama, Saburo**
**981-12, Terao**
**Ayase-City Kanagawa-Prefecture(JP)**

(72) Inventor: **Yamoto, Hisayoshi**
**2-3-18, Cyuorinkan**
**Yamato-City Kanagawa-Prefecture(JP)**

(72) Inventor: **Imamura, Tadashi**
**630-3-103, Ohgami**
**Ayase-City Kanagawa-Prefecture(JP)**

(74) Representative: **Vetter, Ewald Otto, Dipl.-Ing.(FH)**
**Philippine-Welser-Strasse 14**
**D-8900 Augsburg(DE)**

(54) Drop center wheel rim.

(57) A drop center wheel rim for tubeless tires comprising a drop center (11), at least one specific ridge (12) extending radially outwardly from one side edge of the drop center, at least one bead seat (13) extending radially outwardly from the outer side edge of the ridge and at least one flange (14) extending radially outwardly from the outer side edge of the bead seat (13).

The inner surface of the junction between the specific ridge (12) and bead seat is formed with a reinforcement (15) which has a thickness greater than that of the rest of the wheel rim and the inner surface of the reinforcement (15) extends in substantially parallel to the axis of the wheel rim.

*Fig. 2*

Drop Center    Wheel Rim for Tubeless Tires

### Field of the Invention

This invention relates to a drop center wheel rim for tubeless tires which can be reduced in weight without sacrificing its strength and to which a disc or the like can be easily welded.

A disc wheel for automobiles generally comprises a disc and a tire holding rim extending about the disc and the weld connection between the disc and tire holding rim is a very important factor of the strength of the disc wheel.

### Description of the Prior Art

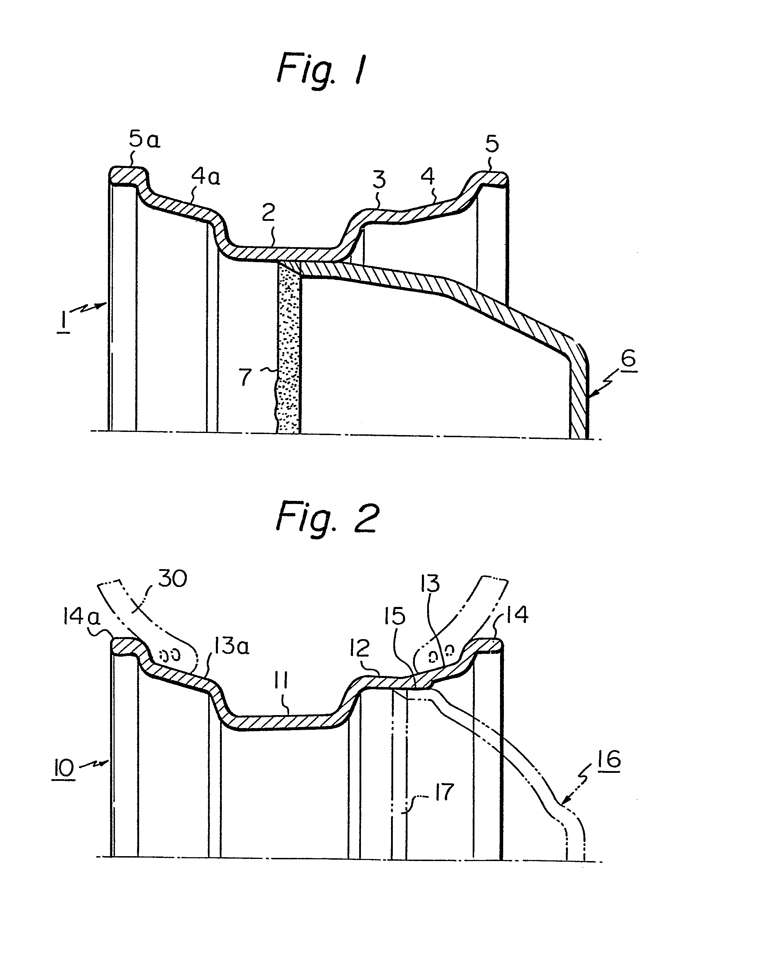

In a prior art tubeless tire wheel for large type trucks and buses as shown in Fig. 1, in order to connect the rim 1 and disc 6 together in stabilized state, the disc 6 is press-fitten into the hollow interior of the rim 1 until the outer peripheral edge of the disc abuts against the flat inner surface of the drop center 2 on the rim 1 onto and from which a tire is mounted and removed and then welded at the outer peripheral edge to the drop center inner surface as shown by reference numeral 7 to provide a unitary structure.

The position of the weld 7 is selected in the light of the fact that the inner surface of the drop center 2 is more parallel to the axis of the rim than the rest of the rim inner surface to the rim axis and quite convenient for welding.

However, in such a case, the inner diameter of the rim 1 at the drop center 2 is inevitably reduced by a value corresponding to the thickness of the disc 6 in contradiction to the demand for increase in the installation space for a brake drum.

In order to increase the inner diameter of the rim at the drop center, provide an increased space for the installation of a brake drum, save the consumption of the material for the disc and reduce the weight of the resulting wheel, the disc 6 is preferably welded to the inner surface of the rim in a position adjacent to the right-hand flange 5 (as seen in Fig. 1). The inventors have conducted various experiments on such an arrangement of the weld. However, the results of the experiments show that when the disc 6 is welded to the flange 5 positioned outwardly from the bead seat 4, since the bead seat 4 is supported in the so-called cantilever fashion, the bead seat 4 is subjected to a higher concentrated stress than in the case in which the disc is welded to the drop center whereby the strength of the rim is reduced. In addition, when the disc is welded to the rim flange, the disc has to be inevitably drawn to a relatively shallow depth and has a reduced cross-section rigidity resulting in an undesirable reduction in the strength of the entire wheel.

The prior art wheel rims of the above type have been generally formed of a rolled or unrolled sheet metal. However, when such a wheel rim is loaded by mounting a tire thereon, the area of the rim bead seat contacting the bead on the tire is subjected to a high concentrated stress and thus, particularly when the wheel rim is formed of an unrolled sheet metal, the area of the rim where stress is concentrated is required to have a high strength sufficient to bear the stress. For the purpose, the thickness of the sheet metal of the entire rim has to be increased somewhat and as a result, the weight of the rim inevitably increases in contradiction to the demand for reduction in the weight of the wheel. Also when the rim is formed of a rolled sheet metal, since the sloped section extending from each of the bead seats to the adjacent flange has an uniform thickness and the area of the sloped section where stress is expected to concentrate is not reinforced, the demand for reinforcing the stress concentration area still exists. Furthermore, the area of the rim bead seat where the rim contacts the tire bead is vulnerable to corrosion which causes deterioration on the rim. Thus, the protection of the tire bead contact area on the rim against corrosive fatigue has been called for.

### Summary of the Invention

This invention is to provide a wheel rim for tubeless tires which can meet such demand. According to the present invention, such demand is met by the provision of a wheel rim for tubeless tires in which the section of the wheel rim extending from a specific ridge to the adjacent bead seat is locally increased in thickness to form a reinforcement with the inner surface of the reinforcement extending in substantially parallel to the axis of the rim.

The above and other objects and attendant advantages of the present invention will be more readily apparent to those skilled in the art from a reading of the following detailed description in conjunction with the accompanying drawings which show a typical prior art tubeless tire wheel and a novel tubeless tire rim embodying the principle of the present invention for comparison purpose.

### Brief Description of the Drawings

Fig. 1 is a fragmentary view in section of a prior art tubeless tire wheel;

Fig. 2 is a fragmentary view in section of a preferred embodiment of the wheel rim constructed in accordance with the principle of the present invention;

Fig 3 is a sectional view on an enlarged scale of a portion of Fig. 2; and

Fig. 4 is a fragmentary view in section showing an application of the wheel rim of the invention.

Before explaining the embodiment of the invention in detail, it is to be understood that the invention is not limited in its application to the details of the construction and arrangement of the components set forth in the following description or as illustrated in the drawings. The invention is capable of other embodiments and of being practiced or carried out in various ways. Also it is to be understood that the
phraseology and termminology employed herein is for purpose
of description and should not be regarded as limiting.

### Preferred Embodiments of the Invention

The present invention will be now described referring to
the accompanying drawings and more particularly, to Fig.s 2
and 3 thereof in which the preferred embodiment of the wheel
rim of the invention is shown. The wheel rim is generally
shown by reference numeral 10 and integrally includes a drop
center 11, a substantially horizontall specific ridge 12 extend-
ing radially outwardly from the right-hand side edge of the
drop center 11 (as seen in Fig.s 2 and 3), a sloped bead seat
13 extending radially outwardly from the outer side edge of
the ridge 12 at an obtuse angle and a substantially horizontal
flange 14 extending radially outwardly from the outer side
edge of the bead seat 14, a sloped bead seat 13a extending
radially outwardly from the left-hand side edge of the drop
center 11 (as seen in Fig.s 2 and 3) at an obtuse angle and
a substantially horizontal flange 14a extending horizontally
radially outwardly from the outer side edge of the bead seat
13a.

In the embodiment as shown in Fig.s 2 and 3, a reinforcement 15 is formed at the junction between the horizontal specific ridge 12 and the sloped bead seat 13 to increase the thick-
ness of the junction with the inner surface of the reinforcement extending in substantially parallel to the axis of the wheel rim 10. As seen in Fig.s 2 and 3, the inner surface of the reinforcement 15 lies in the same plane as the inner surface of the specific ridge 12 does.

In the embodiment of Fig.s 2 and 3, the connection between the wheel rim 10 and a disc 16 can be easily completed by press-fitting the disc 16 which has been drawn to a realtively shallow depth into the hollow interior of the rim 10 until the outer peripheral edge of the disc 16 abuts against the horizontal inner surface of the reinforcement 15 and welding the disc outer peripheral edge to the inner surface of the rim 10 at the reinforcement 15 as shown by reference numeral 17.

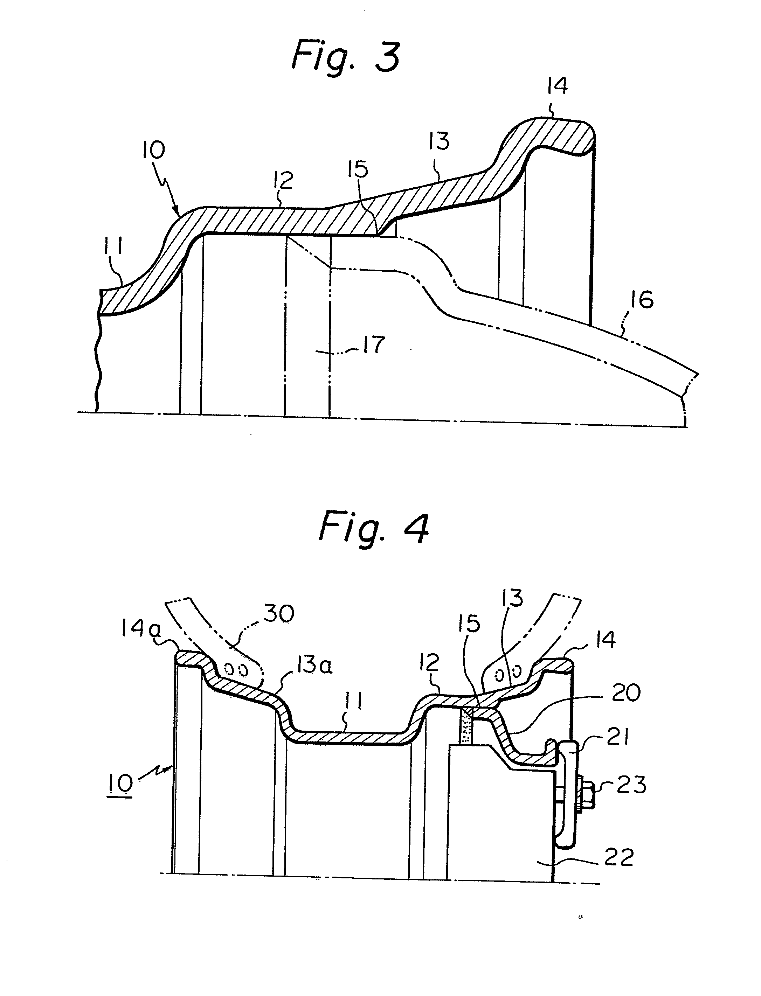

Now referring to Fig. 4 in which an application of the invention is shown and in which the wheel rim 10 of the invention as described hereinabove is employed to provide a demandable wheel. In these Figures, the identical components of the wheel rim are shown by the same reference numerals as assigned to the corresponding components as shown in Fig.s 2 and 3. In the application of the wheel rim 10 as shown in Fig. 4, the disc 16 is eliminated and instead bevel rings 20 (only one bevel ring is shown) are welded to the inner surface of the wheel rim body 10 and more paticularly, of the inner surface of the reinforcement 15 and a holding member 21 is applied against the bevel ring and the hub 22 by means of a set bolt 23 which extends into the hub 22 to thereby mount the wheel rim on the hub 22.

As clear from the foregoing description on the embodiment of the present invention as shown in Fig.s 2 and 3, according to the present invention, since the wheel rim 10 and disc 16 are connected together at a selected area of the inner surface of the rim or the reinforcement 15 where the specific ridge 12 and the adjacent bead seat 13 adjoin to each other, the wheel rim is reinforced in a quite ideal manner and a satisfactory stress balance between the rim and disc can be maintained. To put more particularly, even when a tubeless tire 30 held in position on the rim 10 is expanded under high pressure and a high stress is concentrated at the area of the bead seat 13 contacting the tire 30, since the contact area has a thickness greater than that of the rest of the rim, the rim can be satisfactorily protected against possible damage and/or deformation resulting from such high stress.

When the disc 16 is to be connected to the rim 10, the disc 16 is press-fitted into the rim 10 until the outer peripheral edge of the disc abuts against the inner surface of the reinforcement 15 and then welded at the outer peripheral edge to the reinforcement 15. Thus, the strength in the section of the rim extending from the specific ridge 12 to the adjacent bead seat 13 is increased not only by the increased thickness provided by the reinforcement 15, but also by the weld 17. In addition, since the disc 16 is welded to the junction between the specific ridge 12 and the adjacent bead seat 13 or the reinforcement 15, but not to the inner surface of the center drop as in the case of the prior art wheel rim 1 as shown in Fig. 1, the inner diameter of the rim at the center drop 11 according to the present invention is maintained larger than that at the center drop in the prior art rim in which the disc is welded to the center drop and a greater space can be provided for the installation of a brake drum to thereby enhance the radiating efficiency of the brake drum.

Furthermore, since thickness of the area of the rim extending from the specific ridge 12 to the adjacent bead seat 13 is increased by the reinforcement 15 where a high stress is expected to concentrate, the rim can be imparted a sufficient strength thereto without increasing the thickness of the entire rim and thus, the weight of the rim can be substantially reduced as compared with the prior art rim.

Still furthermore, the weld 17 is positioned more nearer to the flange 15 in the rim of the invention as compared with the weld 7 of the prior art rim 1, the disc 16 adapted to be connected to the rim 10 may be drawn to a shallower depth than that to which the disc 6 associated with the prior art rim 1 should be drawn. Such positioning of the weld 17 contributes to the reduction of the weight of the rim and also to the extension of the distance between the weld 17 and drop center 11 to thereby accelerate the welding operation.

While the present invention has been described in conjunction with the preferred embodiment, it is to be understood that many alternatives, modifications and variations will be

— 9 —

apparent to those skilled in the art in light of the foregoing description. Accordingly, this invention is intended to embrace all such alternatives, modifications and variations which fall within the spirit and scope of the appended claims.

What is claimed is:

1. In a drop center wheel rim for tubeless tires integrally comprising a drop center, a specific ridge extending radially outwardly from one side edge of said drop center, a bead seat extending radially outwardly from the outer side edge of said specific ridge, a flange extending radially outwardly from the outer side edge of said bead seat, a second bead seat extending radially outwardly from the other side edge of said drop center and a second flange extending radially outwardly from said second bead seat, characterized by a reinforcement formed on the inner surface of the junction between said specific ridge and said first-mentioned bead seat with the inner surface of said reinforcement extending in substantially parallel to the axis of said wheel rim.

2. The drop center wheel rim as set forth in Claim 2, in which said reinforcement has a thickness greater than the thickness of the rest of said wheel rim.

3. In a drop center wheel rim and disc assembly comprising a wheel rim integrally including a drop center, a specific ridge extending radially outwardly from one side edge of said drop center, a bead seat extending radially outwardly from the outer side edge of said specific ridge, a flange extending radially outwardly from the outer side edge of said bead seat, a second bead seat extending radially outwardly from the other side edge of said drop center and a second flange extending radially outwardly from the outer side edge of said second flange; and a disc welded to said rim, characterized by the fact that reinforcement is formed on the inner surface of the junction between said specific ridge and said first-mentioned bead seat with the inner surface of said reinforcement extending in substantially parallel to the axis of said wheel rim and said disc is welded at the outer peripheral edge of the disc to said inner surface of the reinforcement.

4. The drop center wheel rim and disc assembly as set forth in Claim 3, in which said reinforcement has a thickness greater than the thickness of the rest of said wheel rim.

5. In a drop center wheel rim and boss assembly comprising a wheel rim integrally including a drop center, a specific ridge extending radially outwardly from one side edge of said drop center, a bead seat extending radially outwardly from the outer side edge of said specific ridge, a flange extending radially outwardly from the outer side edge of said flange, a second bead seat extending radially outwardly from the other side edge of said drop center and a second flange extending radially outwardly from the outer side edge of said second bead seat; and a boss connected to said wheel rim, characterized by the fact that a reinforcement is formed on the inner surface of the junction between said specific ridge and said first-mentioned bead seat with the inner surface of said reinforcement extending in substantially parallel to the axis of said wheel rim and said boss is surrounded by and connected to said wheel rim by means of at least one bevel ring wedled to said inner surface of the reinforcement and at least one holding member bolted to the boss in abutment against the boss and said bevel ring.

6. The drop center wheel rim and boss assembly as set forth in Claim 5, in which said reinforcement has a thickness greater than the thickness of the rest of said wheel rim.

**Fig. 1**

**Fig. 2**

Fig. 3

Fig. 4

## European Patent Office

**EUROPEAN SEARCH REPORT**

Application number

EP 81 10 9897

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A- 784 131 (DUNLOP) <br> * page 1, line 64 - page 2, line 3; figures 9,10 * | 1 | B 60 B 21/02 <br> B 60 B 3/04 |
| A | FR-A- 861 796 (FIRESTONE) <br> * page 1, line 60 - page 3, line 2; figures 3-5 * | 1 | |
| P | DE-A-2 946 674 (KLAVE) <br> * page 6, line 3-11; figure 1 * | 1 | |
| A | AUTOMOBILTECHNISCHE ZEITSCHRIFT, vol.77, no.2, February 1975 <br> H. BRINKMANN: "Schreibenräder für schlauchlose Nutzfahrzeugreifen", pages 35-39 * page 39, left-hand column, line 4-21 * | 1 | |

| TECHNICAL FIELDS SEARCHED (Int. Cl. ³) |
|---|
| B 60 B 3 <br> B 60 B 21 |

The present search report has been drawn up for all claims

| Place of search | Date of completion of the search | Examiner |
|---|---|---|
| THE HAGUE | 17-09-1982 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82